# EUROPEAN PATENT APPLICATION

(11) **EP 3 501 866 A1**
(43) Date of publication of application: **26.06.2019**
(21) Application number: 17848204.8
(22) Date of filing: 25.07.2017
(51) Int. Cl.: B60J 11/04

(54) **PROTECTIVE COVER FOR AUTOMOTIVE VEHICLES**

(30) Priority: 06.09.2016 ES 201631092 U
(71) Applicant: Esqueu Viñoles, David, 17160 Anglès (ES); Pujulà Custojà, Elisenda, 17160 Anglès (ES)
(72) Inventor: Esqueu Viñoles, David, 17160 Anglès (ES); Pujulà Custojà, Elisenda, 17160 Anglès (ES)
(74) Representative: Espiell Gomez, Ignacio
(86) International application number: PCT/ES2017/070535
(87) International publication number: WO 2018/046782

(57) **Abstract**

It comprises a laminar body having dimensions adapted to cover the top of the vehicle and provided with means (2, 2', 2") fixing it on it, formed by two foldable layers (3), internal and external, of flexible and airtight material, between which there exists, at least, a chamber (4) inflatable through, at least, a valve (5); in that, when it is inflated, this chamber (4), determines a 2 to 2.50 centimetres thick padded surface encompassing, at least, the area of the tarp (1) that remains in correspondence with the top part of the vehicle. The valve (5) is provided with an adaptor for the use of the bottles of pressurized CO2 gas for inflating and arranged in the area of the door of the driver of the vehicle, being provided with closing means (6) that cover it, there are magnetized means (7) fixing and adapting it, when the chamber (4) is inflated, to the outline of the vehicle. The means (2, 2', 2") fastening to the vehicle comprise adjustable elastic bands (2, 2'), provided with hooks at their end, to be fastened to the lower part of the vehicle, as well as elastic rubber bands forming a loop (2") to fasten the tarp to the rearview mirrors of the vehicle.

## Description

### Object of the invention

The invention, as it appears in the title of this specification refers to a Protective cover for automotive vehicles that contributes, to the function to which it is designed, with structural and constitutive characteristics that will be disclosed in detail thereafter which mean a novelty in the current state-of-art.

More particularly, the object of the invention is focused in a protection tarp to cover motor vehicles of different types, the structural configuration of which , formed based on plastic material with an inflatable air chamber, is specially designed to provide the said protection, in addition to against the effects of the sun or the dust, against atmospheric effects such as the hail, avoiding eventual damages that can be caused on the bodywork or window panes by the pieces of ice forming it and that, in no few cases, reach a significant size.

### Field of application of the invention

The field of application of this invention is within the sector of the industry engaged in the manufacture of accessories for car, namely focussing in the scope of Protective cover for automotive vehicles.

### Background of the invention

As a reference to the current state-of-art, it should be stated that, although in the market multiple types and models of protection tarps for vehicles are broadly known, in most cases, they are only designed to protect against the effect of the dust and/or the solar radiation on the vehicle, for which they use to be formed by a piece of fabric, of different materials, having fastening means in some cases, normally consisting of elastic rubber bands sewn on the perimeter edges.

The objective of this invention, however, seeks to provide the market with a new and improved type of tarp for the vehicles that, in addition to the protection against the dust and the effects of the sun, provides protection against the damage caused on the bodywork and/or the window panes by the impact of objects in freefall, such as the particles, in some case true stones, caused by atmospheric phenomena such as the hail, on the other hand phenomena that occur very often, namely in certain geographical regions.

On the other hand, it shall be stated that, at least the applicant is not aware of the existence of any other protection tarp or invention having a similar application that possesses technical, structural and constitutive characteristics same or similar to that concretely preconized herein, as it is claimed.

### Explanation of the invention

The Protective cover for automotive vehicles that the invention proposes is therefore configured as a novelty within its field of application, the characterizing details distinguishing it duly appearing in the final claims attached to this description.

As it was stated before, what the invention proposes is a tarp to cover motor vehicles in order to protect their bodywork against the possible damages caused by the hail and that, at same time, also protects against the dust and against the effects of the sun, the heat and the cold, being distinguished by the fact that it possesses a structural configuration , formed based on flexible and airtight plastic material or another similar material, that possesses , at least , an inflatable air chamber that, when it is inflated, determines a several centimetres thick padded surface that wraps on the top the full surface of the vehicle to provide that protection.

For this, the tarp possesses, at least an inflation valve that is either carried out with any manual pump or with a gasbag, or preferably, it is carried out by means of the use of small bottles of pressurized CO2 gas, of the same type as those used for cycling and other applications, which, for example, can be conveniently supplied with the commercialisation itself of the tarp, to make sure that they have the gas suitable amount and pressure to quickly and safely inflate the tarp and/or be independently purchased.

Preferably, this valve will be incorporated on the part of the tarp that, when placed, remains close to the door of the driver, because its use is mostly devised to protect the vehicle against the hail when it is parked and without occupants, so that the said door will be left partly open, to conceal it within, closed with a glider or button, when the tarp is inflated, and thereafter the door of the vehicle will be closed to avoid that third parties possibly unduly tamper the valve.

Anyway, when the tarp is inflated, it acquires a regular thickness throughout it, ranging from 2 to 2.50 cm, although this does not mean a limitation, because the possibility is also contemplated to provide areas thicker than the others, for example the central area in correspondence with the ceiling, the front window pane and the hood, that are the most exposed to the hail direct impact.

In addition, the tarp is provided with fastening means that allow to quickly and easily place and remove it, avoiding that it can fall, the wind takes it away or it can be stolen by third parties.

Preferably, the said fastening means in addition to possess elastic bands with hooks at their ends to internally and externally fasten the tarp on strategic points of the bodywork, as well as elastic rubber bands to fasten it to the rearview mirrors, the existence of one or more areas with magnets is contemplated, for example magnetized laminar plates that, incorporated to certain areas of the internal face of the tarp, allow, in addition to a quick and easy fastening , to adapt it to the shapes of the vehicle, because when it is inflated it becomes stiffer.

The tarp, logically, can have different sizes and shapes, to adapt itself to different types of vehicles to which it is designed, such as tales big, small, family, private cars, minivan- type, SUV (Sport Utility Vehicle), off-road vehicle as well as motorhomes, trailers, motorcycles, trucks, vans or coaches. But, in addition, the fastening means it possesses, namely the elastic bands with fastening hooks, will have an adjustable length to adapt themselves to different sizes of vehicles.

Last, the tarp is easily foldable to occupy a minimum volume that allows its storage in a small space, for example within the vehicle itself. For this, its material is, in addition to flexible, preferably, very thin and light, so that, when it is not inflated, it can be folded and stored in a carriage and storage envelope-type bag, occupying a volume similar to that occupied by a pair of folded bed sheets, with approximate sizes of 30 x 25, 35 x 40, or 30 x 32 centimetres.

This bag, that at same time serves as a packing for its commercialisation, optionally incorporates one or more bottles of gas for inflating the tarp, as well as an instruction leaflet for unfolding, placing, inflating and later folding it.

At the sight of all above, it can be seen that the tarp for protection against the hail for motor vehicles shows an innovating structure having structural and constitutive characteristics unknown until now for the object to which it is designed, reasons that joined to its practical utility, provide it with sufficient ground to obtain the privilege of exclusivity applied for.

### Description of the drawings

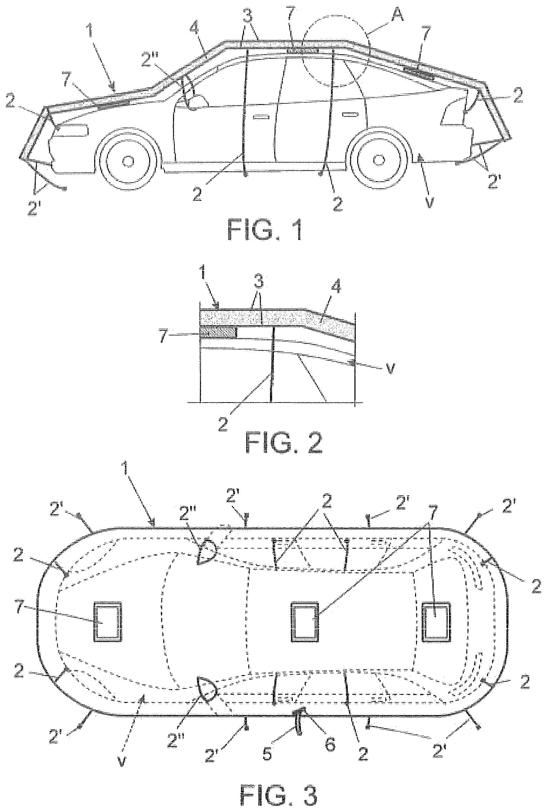

To complement the description that is being carried out and in order to assist to a best understanding of the characteristics of the invention, attached to this specification, as an integral part thereof, there is a drawing, with illustrating and non-limiting purpose where the following has been represented:
The figure number 1.- It shows a schematic elevation section view of an example of embodiment of the Protective cover for automotive vehicles, object of the invention, that has been represented incorporated on a private car, the main parts and elements it comprises can be seen, as well as its configuration and arrangement.
The figure number 2.- It shows an enlarged view of the detail A appearing in the figure 1, showing the configuration of the layers that determine the inflatable chamber of the tarp.
And the figure number 3.- It shows a lower plan view, also schematic, of the example of protection tarp, according to the invention, in this case with the vehicle represented in it in dashed lines to show the position thereof.

### Preferred embodiment of the invention

At the sight of the said figures, and according to the numerals adopted, a non-limiting example of embodiment of the Protective cover for automotive vehicles preconized appears, which comprises the parts and elements stated and disclosed in detail below.

Thus, as it can be seen in the said figures, in which it has to be borne in mind that the proportions have been exaggerated to allow a best observation of all the elements they show, the tarp (1) in question having dimensions adapted to cover the top of the vehicle (v) to which it is designed and provided with fastening means (2, 2', 2") to it, is configured out of a laminar body that is distinguished because it is formed by two layers (3), internal and external, of flexible and airtight material, between which there exists, at least, a chamber (4) inflatable by at least, a valve (5) and that, when it is inflated, the said chamber (4), determines a padded surface, several centimetres thick, preferably ranging from 2 to 2. 50 cm, encompassing at least the area of the tarp (1) that remains in correspondence with the top part of the vehicle, although, preferably, it encompasses its full extent.

Preferably, this valve (5), in addition to be adapted for the inflation with a manual pump or other means, is provided with an adaptor for the use of pressurized CO2 gas bottles, which, with due charge and pressure for such inflation optionally, are supplied packed with the tarp (1) itself for its commercialization, preferably in a bag in which the tarp (1) is folded occupying a minimum space. It shall be pointed out that the said bag and bottles are not represented in the figures as it was deemed unnecessary.

Also, in a preferred manner, the valve (5) is arranged in correspondence with the area of the door of the driver of the vehicle and provided with closing means (6) that covers it fastened , for example, by means of a glider or button.

In addition, the tarp (1) preferably contemplates means (7) fastening and adapting it, when the chamber (4) is inflated, to the vehicle outline, at least on the top area of the bodywork, that preferably consists of magnetized elements, consisting, for example, of magnetized laminar plates incorporated integral with the internal face of the internal layer (3) of the tarp (1), so that they are adhered to the bodywork on the hood and the ceiling of the vehicle, constituting, therefore, at same time quick and easy fixing means.

In addition, however, the tarp (1), as it was stated before, also possesses means (2, 2', 2") fastening to the vehicle, that allow to fasten it, whether it is inflated or not, which preferably include elastic bands (2, 2'), provided with hooks at their end to be fastened to the lower part of the vehicle on the front, rear or side ends , or to the hood, the trunk or the lower part of the doors, they can be internal (2), that means, be incorporated on the internal face of the tarp, so that they are not detected externally, or external (2'), that means, incorporated on the external edge of the tarp (1), as well as elastic rubber bands that form a loop (2") to fasten the tarp on the rearview mirrors of the vehicle.

Preferably, these elastic bands (2, 2') have in both cases an adjustable nature to adapt their length to different sizes of vehicle.

Sufficiently disclosed the nature of this invention, as well as the manner to implement it, it is not considered necessary to extend any longer its explanation in order that any person skilled in the art understands its extent and the advantages arising from it and it is stated that, within its essence, it can be implemented in other forms of embodiment that differ in detail of that stated for example purpose and that the protection sought shall cover, provided that its main principle is not altered, changed or modified.

## Claims

1. Protective cover for automotive vehicles that, applicable to protect the bodywork of the vehicle (v) against damages caused by the hail, as well as the dust, the sun, the heat and the cold, and configured out of a laminar body having dimensions adapted to cover the top of the vehicle and provided with fixing means (2, 2', 2") to it, is **characterized in that** the said laminar body configuring it, is formed by two layers (3), internal and external, of a flexible and airtight material, between which there exists, at least, a chamber (4) inflatable through at least, a valve (5); **in that**, when this chamber (4), is inflated it determines a several centimetres thick padded surface that encompasses, at least, the area of the tarp (1) that remains in correspondence with the top part of the vehicle.

2. Protective cover for automotive vehicles, according to claim 1, **characterized in that** the chamber (4), when it is inflated, determines a padded surface that encompasses the full extent of the tarp (1).

3. Protective cover for automotive vehicles, according to claim 1 or 2, **characterized in that** the chamber (4), when it is inflated, has a thickness ranging from 2 to 2.50 cm.

4. Protective cover for automotive vehicles, according to any of the claims 1 to 3, **characterized in that** the valve (5) is provided with an adaptor for the use of bottles of pressurized CO2 gas.

5. Protective cover for automotive vehicles, according to any of the claims 1 to 4, **characterized in that** the valve (5) is arranged in correspondence with the area of the door of the driver of the vehicle.

6. Protective cover for automotive vehicles, according to any of the claims 1 to 5, **characterized in that** the valve (5) is provided with closing means (6) that cover it, fastened, for example, by means of glider or button.

7. Protective cover for automotive vehicles, according to any of the claims 1 to 6, **characterized in that** it comprises means (7) fixing and adapting it, when the chamber (4) is inflated, to the outline of the vehicle, at least on the top area of the bodywork.

8. Protective cover for automotive vehicles, according to the claim 7, **characterized in that** the fixing and adapting means (7) consist in magnetized elements, incorporated integral on the internal face of the internal layer (3) of the tarp (1) so that they adhere to the bodywork of the vehicle, constituting at same time quick and easy fixing means.

9. Protective cover for automotive vehicles, according to any of the claims 1 to 8, **characterized in that** the means (2, 2', 2") fastening to the vehicle comprise elastic bands (2, 2'), provided with hooks at their end, to be fastened on the lower part of the vehicle at the front, rear and side ends, or to the hood, trunk or the lower part of the doors, as well as elastic rubbers that form a loop (2") to fasten the tarp on the rearview mirrors of the vehicle.

10. Protective cover for automotive vehicles, according to the claim 9, **characterized in that** the elastic bands are internal (2), that means, incorporated on the internal face of the tarp, so that they are not detected externally.

11. Protective cover for automotive vehicles, according to the claim 9 or 10, **characterized in that** the elastic bands are internal (2'), that means, incorporated on the external edge of the tarp (1).

12. Protective cover for automotive vehicles, according to any of the claims 9 to 11, **characterized in that** the elastic bands (2, 2') are adjustable to adapt their length to different sizes of vehicle.

13. Protective cover for automotive vehicles, according to any of the claims 1 to 12, **characterized in that** the laminar body that constitutes the tarp is foldable, to be folded and stored in a packing envelope-type bag, for carriage and storage, occupying a minimum volume.

14. Protective cover for automotive vehicles, according to any of the claims 1 to 13 **characterized in that** it is packed together with one or more bottles of pressurized CO2 gas with the charge and pressure suitable for inflating it.
